# EUROPÄISCHE PATENTSCHRIFT

(11) **EP 0 644 166 B1**
(45) Veröffentlichungstag und Bekanntmachung des Hinweises auf die Patenterteilung: **15.04.1998**
(21) Anmeldenummer: 94113722.6
(22) Anmeldetag: 01.09.1994
(51) Int. Cl.: C05F 17/00, C05F 17/02, C05F 9/00

(54) **Verfahren und Vorrichtung zur Kompostierung eines Gemisches von organischen Stoffen und Störstoffen**
Process and device for composting a mixture of organic materials containing perturbating compounds
Procédé et dispositif de compostage d'un mélange de matières organiques contenant des produits perturbateurs

(30) Priorität: 03.09.1993 DE 4329833
(43) Veröffentlichungstag der Anmeldung: 22.03.1995
(73) Patentinhaber: HERHOF UMWELTTECHNIK GmbH, D-35606 Solms-Niederbiel (DE)
(72) Erfinder: Schnorr, Karl-Ernst, Dipl.-Ing., D-35633 Lahnau (DE)
(74) Vertreter: Zinnecker, Armin, Dipl.-Ing.

(56) Entgegenhaltungen:
- DE-A- 2 431 120
- DE-A- 3 015 239
- FR-A- 2 689 790
- GB-A- 1 081 810

## Beschreibung

Die Erfindung betrifft ein Verfahren zur Kompostierung eines Gemisches von organischen Stoffen und Störstoffen, insbesondere zur Kompostierung von organischen Abfällen. Ferner betrifft die Erfindung eine Vorrichtung zur Durchführung eines derartigen Verfahrens.

Bei der Kompostierung von organischen Abfällen aus Haus und Garten gelangen immer auch Steine, Glas und Keramikscherben in die Abfälle und somit in den Kompost. Da diese Stoffe nicht wertsteigernd sondern qualitätsmindernd sind, müssen sie von der organischen Fraktion getrennt werden (siehe Güterichtlinien der Bundesgütegemeinschaft Kompost).

Des weiteren benötigen Mikroorganismen für ihren Stoffwechsel Wasser. Dieses wird nach heutigem Stand der Technik durch Verdüsung bei der Zerkleinerung sowie Mischung während der Mietenumsetzung zugegeben.

Der bisherige Stand der Trenntechnik für Kompost beruht auf einem niedrigen Wassergehalt des Kompostes. Durch Siebvorgänge und Ballistik wurden Teile niedrigen spezifischen Gewichts von Teilen höheren spezifischen Gewichts im Luftstrom getrennt. Bei der Klassierung von mineralischen Stoffen wird auch bereits die Sinkabscheidung in einer Flüssigkeit erfolgreich praktiziert. Die Sinkabscheidung konnte allerdings bei der Kompostklassierung bis heute deshalb nicht verwirklicht werden, weil der Kompost hierbei so stark vernäßt, daß er nicht mehr belüftbar ist.

In den Güterichtlinien wird bei der Bewertung von Kompost als obere Korngrenze für Störstoffe (hierzu zählen Steine, Glasteile, Keramikteile und Kunststoffteile) 2 mm festgelegt, was bedeutet, daß eine Absiebung erforderlich ist. Die Störstoffe konzentrieren sich daher im Siebüberlauf. Mit den Störstoffen wird somit auch wertvolle organische Substanz verworfen, da diese im Kompost mit etwa 70% der Masse den weitaus größten Anteil hat.

Aus der DE-OS 40 18 810 ist ein Verfahren zur Kompostierung von Müll, insbesondere Hausmüll, der organische Bestandteile enthält bekannt, bei dem der Müll zunächst kompostiert wird. Der Müll wird nach der Kompostierung verpreßt. Durch die so erreichte höhere Dichte wird der Platzbedarf für die Lagerung vermindert. Das nach der Kompostierung vorhandene Material kann gesiebt werden, um einen Feinkompost abzutrennen. Der verbleibende Rest wird verpreßt.

Aus der FR-A-2 689 790 ist ein Verfahren zur Dekontamination von Abfällen bekannt, die einer biologischen Behandlung unterzogen worden sind. Zunächst wird eine Fraktion separiert, die Batterien enthält, was vorzugsweise auf magnetische Weise geschieht. Anschließend werden organische verschmutzende Bestandteile durch eine hydraulische und/oder aerobe Behandlung entfernt.

Die GB-A-1 081 810 offenbar ein Verfahren zur Kompostierung von städtischen Abfällen, bei dem eine befeuchtete Masse in einem geschlossenen Behälter aerobisch fermentiert wird. Anschließend wird die Masse dem Behälter entnommen und metallische Materialien entfernt. Die Masse wird pulverisiert und einem weiteren Behälter zugeführt, der oben offen ist, um dort die aerobische Fermentation zu vervollständigen.

Aus der DE-A-2 431 120 ist ein Verfahren zur Aufarbeitung von Hausmüll bekannt, bei dem der feine oder zerkleinerte Hausmüll mit kommunalen industriellen Abwässern oder Klärschlamm aufgeschwemmt wird. Die eventuell sich am Boden absetzenden Schwerststoffe werden abgetrennt. Die Aufschwemmung wird dann der Einwirkung von Druckstößen elektrischer Entladungen bis zu einem möglichst weitgehenden zellularen Aufschluß ausgesetzt und nachfolgend auf eine für eine biologische Weiteraufbereitung geeignete Restfeuchte filtriert. Die filtrierte Aufschwemmung wird durch Einwirkung von Mikroorganismen in einen Biohumus umgewandelt. Das Filtrat wird durch Einwirkung von Mikroorganismen in biologisch einwandfreies Wasser überführt.

Die DE-A-3 015 239 offenbart ein Verfahren zur Erzeugung von Bio-Gas unter Verwendung von Hausmüll und kommunalem Klärschlamm, bei dem unbehandelter Hausmüll und unentwässerter Klärschlamm gemeinsam mit Hilfe eines zwei- oder mehrstufigen Mahlvorganges zerkleinert und gemischt werden. Die dabei entstehende Schlemme wird einer mehrstündigen Quellzeit unterworfen. Anschließend werden alle nicht verrottbaren Anteile der Schlemme durch einen oder mehrere Flotationsvorgänge ausgeschieden. Der Feststoffanteil der verbleibenden Schlemme wird durch mechanische Entwässerung auf etwa 40 % erhöht. Die so entwässerte Schlemme wird einem gesteuerten anaeroben Faulprozeß unterworfen, der bei Erreichen der maximalen Abgabe von brennbarem Bio-Gas abgebrochen wird.

Aufgabe der Erfindung ist es, ein Verfahren der eingangs angegebenen Art vorzuschlagen, bei dem die in dem Gemisch vorhandenen organischen Stoffe besonders effektiv genutzt werden. Eine weitere Aufgabe der Erfindung besteht darin, eine Vorrichtung zur Durchführung eines derartigen Verfahrens vorzuschlagen.

Erfindungsgemäß wird diese Aufgabe durch ein Verfahren nach dem Anspruch 1 gelöst. Die organischen Stoffe werden in einem geschlossenen Behälter unter Zwangsbelüftung biologisch abgebaut (Intensivrotte). Vor dem totalen Abbau der leicht abbaubaren organischen Substanz wird der entstandene Rohkompost einem Siebvorgang unterzogen. Der dabei entstehende Siebüberlauf wird einem Sinkabscheider zugeführt, in dem die Störstoffe absinken. Sie können am Boden des Sinkabscheiders entfernt werden. Die in dem Sinkabscheider nicht absinkenden, organischen Stoffe werden mit dem Siebdurchgang vermischt. Das Gemisch besitzt nun zum weiteren Abbau der noch vorhandenen leicht abbaubaren organischen Substanz optimale Startbedingungen hinsichtlich der Feuchte und der Sauerstoffversorgung. Das Gemisch wird erneut in einem geschlossenen Behälter unter Zwangsbelüftung biologisch abgebaut.

Vorteilhafte Weiterbildungen sind in den Unteransprüchen beschrieben.

Vorzugsweise wird der Rohkompost zerkleinert. Der Siebvorgang erfolgt vorzugsweise nach der Zerkleinerung des Rohkomposts.

Nach einer weiteren vorteilhaften Weiterbildung wird als Flotationswasser für den Sinkabscheider Kondensat aus dem Abbauprozeß verwendet.

Eine weitere vorteilhafte Weiterbildung ist dadurch gekennzeichnet, daß Luft in das Flotationswasser des Sinkabscheiders eingedüst wird.

Vorzugsweise wird das Flotationswasser des Sinkabscheiders zu Brauchwasser aufbereitet.

Eine erfindungsgemäße Vorrichtung zur Durchführung des erfindungsgemäßen Verfahrens besteht aus den Merkmalen des Anspruchs 6.

Eine vorteilhafte Weiterbildung ist gekennzeichnet durch ein Zerkleinerungsaggregat.

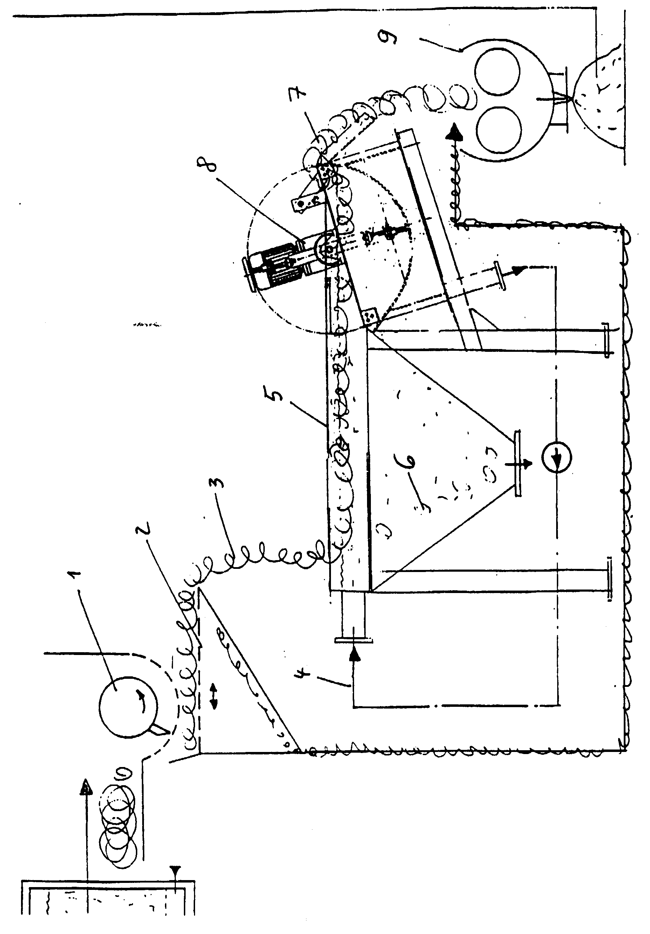

Ein Ausführungsbeispiel der Erfindung wird nachstehend anhand der beigefügten Zeichnung im einzelnen erläutert. In der Zeichnung zeigt die
- einzige Figur: eine erfindungsgemäße Vorrichtung in einer schematischen Darstellung.

Anhand der in der einzigen Figur gezeigten, besonders vorteilhaften Vorrichtung wird nachfolgend der Verfahrensablauf beschrieben: Aus der Intensivrotte wird der Kompost in einem Zerkleinerungsaggregat 1 mit Siebboden nachzerkleinert, auf eine Siebstrecke 2 aufgegeben und in zwei Fraktionen getrennt. Der Siebüberlauf 3 fällt in den Wasserstrom 4 des Gerinnes 5. Dabei sinken die schweren Stoffe 6 zu Boden und die leichten Stoffe 7 werden an der Wasseroberfläche dem Siebrechen 8 zugeführt. Der Siebrechen 8 fördert die mit Wasser benetzten Kompostteile aus dem Wasserbad in einen Mischer 9. Danach gelangt der Kompost wieder in die Intensivrotte, bis die leicht abbaubaren organischen Bestandteile vollständig abgebaut sind.

Durch die Erfindung wird ein Verfahren und eine Vorrichtung zur Kompostierung von Abfällen geschaffen mit einer zur Zwischenzerkleinerung, Nachbefeuchtung und Schwerstoffabtrennung unterbrochenen Intensivrotte in einem allseits geschlossenen, wärmeisolierten Raum.

Dabei wird davon ausgegangen, daß bei der Intensivrotte vor dem totalen Abbau der leicht abbaubaren organischen Substanz, der in einer kurzen Zeit von weniger als zehn Tagen erfolgt, der Kompost nach ca. 3-4 Tagen trockengeblasen und einem Siebvorgang unterzogen wird. Dadurch entsteht eine Feinkorn-Teilmenge mit sehr niedrigem Wassergehalt (ca. 25-30%). Die übrige Kompostmenge mit den inerten Störstoffen wird über einen Sinkabscheider 5 mit Siebrechen 8 geleitet, der zur Verbesserung der Trennleistung zusätzlich belüftet werden kann. Hierbei lagern sich die Luftbläschen an die schwimmfähigen organischen Stoffe an, erhöhen ihren Auftrieb und verbessern den Rottestart bei der nachfolgenden erneuten Intensivrotte. Die spezifisch schweren Teile sinken im Wasserbett sehr schnell ab und können am Boden des Sammelgefäßes entfernt werden. Die mit einem Schöpffördergerät aus dem Wasser entfernten organischen Kompostbestandteile werden nun - mit oder ohne Zwischenzerkleinerung - wieder mit der vorher durch Siebung abgetrennten Feinkornfraktion zusammengeführt und gemischt. Dadurch entsteht ein Feuchtigkeitsausgleich und der Kompost erhält insgesamt die für den weiteren Abbau organischer Substanz optimale Feuchte ohne zu vernässen. Der besondere Effekt beruht dabei darauf, daß die in 3-4 Tagen mikrobiell vorhydrolysierte organische Substanz hydrophobe Eigenschaften aufweist, die das Eindringen des Wassers in die Zellen während der Flotation verhindern. Der Kompost kann so nicht vernässen, so daß die Belüftung nicht mehr funktioniert. Das Wasser haftet lediglich an den Oberflächen der Partikel und kann von hier leicht auf wasseraufnahmefähige, zugemischte, trockene Kompostpartikel übergehen.

Der Kompost besitzt nun die zum weiteren Abbau der noch vorhandenen leicht abbaubaren organischen Substanz optimale Startbedingungen hinsichtlich der Feuchte und der Sauerstoffversorgung. Vollständiger Abbau der leicht abbaubaren organischen Substanz und Verdunstung des zur Nachbefeuchtung zugeführten Wassers bei der Flotation kennzeichnen das Ende der technisch gesteuerten Kompostierung oder Intensivrotte. Der so erreichte Zustand kennzeichnet einen Kompost mit dem für Pflanzen verträglichen Rottegrad (derzeit Rottegrad IV nach Merkblatt 10 der Länderarbeitsgemeinschaft Abfall).

In diesem Zustand ist der Kompost in hochaufschließenden Mühlen in ein torfgleiches Produkt mit Korngrößen kleiner 2 mm zu vermahlen, wobei anschließend die noch verbliebenen Kunststofffolienteile zu 100% durch Siebung entfernt werden.

Das für die Flotation benötigte Wasser wird als Kondensat aus der Abluft des Kompostierungsprozesses zurückgewonnen, so daß hierfür kein Frischwasser erforderlich ist. Das Wasser nimmt bei dem Flotationsvorgang Kompostinhaltsstoffe auf, die bei einem nachgeschalteten Reinigungsvorgang wieder entfernt werden. Danach kann das Wasser im gereinigten Zustand in die Atmosphäre verdunstet oder anderweitig genutzt werden.

## Patentansprüche

1. Verfahren zur Kompostierung eines Gemisches von organischen Stoffen und Störstoffen, insbesondere zur Kompostierung von organischen Abfällen,
bei dem die organischen Stoffe in einem geschlossenen Behälter unter Zwangsbelüftung (Intensivrotte) biologisch abgebaut werden,
bei dem der bei der Intensivrotte vor dem totalen Abbau der leicht abbaubaren organischen Substanz entstandene Rohkompost einem Siebvorgang unterzogen wird,
bei dem der dabei entstehende Siebüberlauf einem Sinkabscheider zugeführt wird, in dem die Störstoffe absinken,
bei dem die in dem Sinkabscheider nicht absinkenden Stoffe mit dem Siebdurchgang vermischt werden
und bei dem das Gemisch anschließend erneut in einem geschlossenen Behälter unter Zwangsbelüftung biologisch abgebaut wird.

2. Verfahren nach Anspruch 1, dadurch gekennzeichnet, daß der Rohkompost zerkleinert wird.

3. Verfahren nach einem der Ansprüche 1 oder 2, dadurch gekennzeichnet, daß als Flotationswasser für den Sinkabscheider Kondensat aus dem Abbauprozeß verwendet wird.

4. Verfahren nach einem der vorhergehenden Ansprüche, dadurch gekennzeichnet, daß Luft in das Flotationswasser des Sinkabscheiders eingedüst wird.

5. Verfahren nach einem der vorhergehenden Ansprüche, dadurch gekennzeichnet, daß das Flotationswasser des Sinkabscheiders zu Brauchwasser aufbereitet wird.

6. Vorrichtung zur Durchführung des Verfahrens nach einem der vorhergehenden Ansprüche, bestehend aus
einem geschlossenen Behälter mit einer Einrichtung zur Zwangsbelüftung,
einer Siebstrecke (2),
einem daran anschließenden Sinkabscheider (4, 5, 6), dem der Überlauf der Siebstrecke (2) zuführbar ist,
und einem Mischer (9), dem die Stoffe, die in dem Sinkabscheider (4, 5, 6) nicht absinken, und der Durchgang der Siebstrecke (2) zuführbar sind.

7. Vorrichtung nach Anspruch 6, gekennzeichnet durch ein Zerkleinerungsaggregat (1).

## Claims

1. Process for composting a mixture of organic substances and interfering substances, in particular for composting organic wastes,
in which the organic substances are biodegraded in a closed vessel with forced ventilation (intensive rotting),
in which the crude compost formed during the intensive rotting, prior to the total decomposition of the readily decomposable organic substance, is subjected to a screening operation,
in which the screen overflow formed during this operation is fed to a sedimentation separator, in which the interfering substances sink,
in which the substances which do not sink in the sedimentation separator are mixed with the screen underflow
and in which the mixture is then again biodegraded in a closed vessel with forced ventilation.

2. Process according to Claim 1, characterized in that the crude compost is comminuted.

3. Process according to one of Claims 1 or 2, characterized in that condensate from the decomposition process is used as flotation water for the sedimentation separator.

4. Process according to one of the preceding claims, characterized in that air is injected into the flotation water of the sedimentation separator.

5. Process according to one of the preceding claims, characterized in that the flotation water of the sedimentation separator is treated to make plant water.

6. Device for carrying out the process according to one of the preceding claims, comprising
a closed vessel with a device for forced ventilation,
a screening line (2),
an adjoining sedimentation separator (4, 5, 6), to which the overflow from the screening line (2) can be fed,
and a mixer (9), to which the substances which do not sink in the sedimentation separator (4, 5, 6) and the underflow from the screening line (2) can be fed.

7. Device according to Claim 6, characterized by a comminution unit (1).

## Revendications

1. Procédé pour le compostage d'un mélange de matières organiques et de matières perturbatrices, en particulier pour le compostage de déchets organiques,
dans lequel les matières organiques sont dégradées biologiquement dans un récipient fermé avec aération forcée (pourrissage intensif),
dans lequel le composte brut résultant du pourrissage intensif avant la dégradation totale de la substance organique facilement dégradable est soumis à un processus de filtration,
dans lequel l'excès de filtration qui en résulte est conduit à un séparateur par décantation dans lequel se déposent les matières perturbatrices,
dans lequel les matières ne se déposant pas dans le séparateur par décantation sont mélangées avec les matières ayant traversé le filtre
et dans lequel le mélange est finalement à nouveau dégradé biologiquement dans un récipient fermé avec aération forcée.

2. Procédé selon la revendication 1, caractérisé en ce que le composte brut est désintégré

3. Procédé selon l'une des revendications 1 ou 2, caractérisé en ce qu'en tant qu'eau de flottaison pour le séparateur par décantation on utilise le condensat du procédé de dégradation.

4. Procédé selon l'une des revendications précédentes, caractérisé en ce que l'air est vaporisé dans l'eau de flottaison du séparateur par décantation.

5. Procédé selon l'une des revendications précédentes, caractérisé en ce que l'eau de flottaison du séparateur par décantation est traitée en eau utile.

6. Dispositif pour la mise en oeuvre du procédé selon l'une des revendications précédentes, se composant de
un récipient fermé avec un dispositif pour l'aération forcée,
un tronçon de filtration (2),
un séparateur par décantation (4, 5, 6) qui s'y raccorde, auquel peut être conduit l'excédent du tronçon de filtration (2),
un mélangeur (9) auquel peuvent être conduites les matières qui ne sombrent pas dans le séparateur par décantation (4, 5, 6) et celles ayant traversé le tronçon de filtration (2).

7. Dispositif selon la revendication 6, caractérisé par un ensemble de désintégration (1).
